# NEUE EUROPÄISCHE PATENTSCHRIFT

(11) **EP 3 019 293 B2**
(45) Veröffentlichungstag und Bekanntmachung des Hinweises auf die Entscheidung über den Einspruch: **21.06.2023**
(45) Hinweis auf die Patenterteilung: 16.08.2017
(21) Anmeldenummer: 14722662.5
(22) Anmeldetag: 07.05.2014
(51) Int. Cl.: B22D 41/22, B22D 41/56

(54) **VERFAHREN UND VORRICHTUNG ZUM AUTOMATISCHEN AUSWECHSELN EINER AUSGUSSHÜLSE AN EINEM SCHIEBEVERSCHLUSS EINES METALLURGISCHEN GEFÄSSES**
METHOD AND DEVICE FOR AUTOMATIC REPLACEMENT OF A DISCHARGE SLEEVE ON A SLIDING CLOSURE OF A METALLURGICAL VESSEL
PROCÉDÉ ET DISPOSITIF POUR LE REMPLACEMENT AUTOMATIQUE D'UN MANCHON DE RIGOLE DE COULÉE À UNE FERMETURE COULISSANTE D'UN RÉCIPIENT MÉTALLURGIQUE

(30) Priorität: 11.07.2013 CH 12492013
(43) Veröffentlichungstag der Anmeldung: 18.05.2016
(73) Patentinhaber: Refractory Intellectual Property GmbH & Co. KG, 1100 Wien (AT)
(72) Erfinder: INFANGER, Ivo, CH-6340 Baar/ZG (CH); HUGENER, Bruno, CH-6340 Baar (CH)
(74) Vertreter: Luchs, Willi
(86) Internationale Anmeldenummer: PCT/EP2014/059353
(87) Internationale Veröffentlichungsnummer: WO 2015/003829

(56) Entgegenhaltungen:
- EP-A1- 2 056 983
- DE-A1-102009 050 216
- JP-A- H 067 920
- JP-A- H05 223 469
- JP-A- H06 254 670
- US-A- 5 133 534
- John H. Bickford, ' Introduction to the Design and. Behavior of Bolted Joints, Fourth Edition, Non-Gasketed Joints', CRC Press, 2008

## Beschreibung

Die Erfindung betrifft eine Vorrichtung zum automatischen Auswechseln einer Ausgusshülse an einem Schiebeverschluss eines metallurgischen Gefässes in einer Wartungsstation mit einem Roboter zum Manipulieren des Schiebeverschlusses mit geeigneten Werkzeugen, wobei die Ausgusshülse gegen die Schieberplatte des Schiebeverschlusses mit einem durch Drehen lösbaren Tragring gehalten ist.

Ein Schiebeverschluss dieser Art ist beispielsweise in der EP 2 056 983 näher beschrieben. Er besteht grundsätzlich aus einer gegen eine Hülse des Gefässes anliegende Verschlussplatte und einer relativ zu dieser verschiebbaren Schieberplatte, gegen welche die Ausgusshülse mittels des Tragrings angedrückt ist. Die genannten Komponenten des Schiebeverschlusses sind bekanntlich Teile aus feuerfesten Werkstoffen, die im Giessbetrieb einem starken Verschleiss ausgesetzt sind. Sie müssen daher regelmässig kontrolliert und erforderlichenfalls ausgetauscht werden.

Die dabei anfallenden Wartungs- und Zustellungsarbeiten werden neuerdings in modernen Stranggiessanlagen in einer Wartungsstation der Anlage automatisch durch einen dort installierten Roboter durchgeführt. Von Zeit zu Zeit werden die entleerten Gefässe, beispielsweise Stahlpfannen, samt dem daran befestigten Schiebeverschluss zur Wartungsstation gebracht, wo insbesondere die feuerfesten Verschleissteile kontrolliert, gereinigt und gegebenenfalls durch neue Ersatzteile ausgetauscht werden.

Die Durchführung dieser Arbeiten übernimmt der Roboter, der dort u.a. von einem Werkzeugmagazin, einem Ersatzteillager, einer Mörtelstation, einem Abfallbehälter und einer oder mehreren Ablagen oder Zwischenablagen mit Anschlussstellen für Strom, Druckluft, Sauerstoff, Hydrauliköl etc. umgeben ist. Der Roboter führt die Wartungs- und Zustellungsarbeiten automatisch aus mit Hilfe geeigneter Werkzeuge, die er sich von Fall zu Fall aus dem Werkzeugmagazin herausnimmt.

Die Druckschrift DE-A-10 2009 0 50216 bezieht sich auf ein Verfahren zum Auswechseln eines am Ausguss eines Metallschmelzebehälters, insbesondere einer Stahlgiesspfanne, angeordneten Schiebeverschlusses, bei welchem derselbe von einem dem Behälter zugeordneten Industrieroboter ergriffen, vom Behälter entfernt und abgelegt wird. Der-Schiebeverschluss wird dabei von dem Industrieroboter auf einer Förderbahn abgelegt und mittels dieser Förderbahn in einen ausserhalb des Hitzebereiches eines Pfannenstandes angeordneten Werkstattbereich gefördert. Damit kann aber nur der gesamte Schiebeverschluss via Roboter demontiert und durch ein Förderbahn zu einer Montagestelle geführt werden.

Der Erfindung liegt die Aufgabe zugrunde, ein Verfahren zum automatischen Auswechseln der Ausgusshülse von Schiebeverschlüssen zu schaffen, das nach dem Wechsel die einwandfreie Funktionssicherheit des Schiebeverschlusses im Bereich der Ausgusshülse gewährleistet.

Diese Aufgabe wird erfindungsgemäss durch die Merkmale des Anspruchs 1 bzw. des Anspruchs 4 gelöst.

Auf diese Weise ist sichergestellt, dass die neue Ausgusshülse beim Wechsel immer funktionssicher eingebaut ist, unabhängig von etwaigen Abmessungstoleranzen und anderen veränderlichen Faktoren, wie beispielweise der Grad der Vermörtelung oder das Vorhandensein geringfügiger Unreinheiten.

Um die Arbeit des Roboters zu erleichtern, sieht die Erfindung ausserdem vor, dass er beim Wechselvorgang die Ausgusshülse und den Tragring unabhängig voneinander manipuliert. Dadurch kann er die beiden Komponenten innerhalb der Wartungsstation getrennt voneinander transportieren, indem beispielsweise zunächst der Tragring abgelegt wird, anschliessend die verbrauchte Ausgusshülse in einem Behälter entsorgt wird und danach eine neue Hülse aus dem Ersatzteillager geholt und in einer Mörtelstation vermörtelt wird.

Die Vorrichtung zur Durchführung des Verfahrens zeichnet sich dadurch aus, dass sie mit Mitteln zum Ein- und Ausbauen des Tragrings versehen ist, die sich aus einem Greifring mit Tragringschnappern und einem hydraulischen Rotationszylinder zum Verdrehen des Greifrings zusammensetzen. Der genau steuerbare Rotationszylinder bewirkt, dass beim Wechselvorgang die Schnapper des Greifrings den Tragring mit einem genau definierten Drehmoment verdrehen können. Somit kann dieser mit einer ebenfalls genau definierten Verspannkraft eingespannt werden.

Die Wechselvorrichtung ist auch erfindungsgemäss mit Mitteln zum Ein- oder Ausbauen der Ausgusshülse in Gestalt einer ein- und ausfahrbaren Greiflanze mit pneumatisch, hydraulisch oder elektrisch ein- und ausziehbaren Greifern ausgestattet. Dadurch kann sie mit konstruktiv einfachen Mitteln sowohl die alte als auch die neue Ausgusshülse unabhängig von ihrem genauen Innendurchmesser sicher ergreifen.

Es ist in diesem Sinne vorteilhaft, wenn die Greiflanze mit mehreren hintereinander angeordneten Greiferpaketen versehen ist, die getrennt voneinander unterschiedliche Durchmesser durch Auffahren annehmen können, wobei jedes der Greiferpakete zweckmässigerweise sich aus drei umfänglich gleichmässig verteilt angeordneten Klemmbacken zusammensetzt.

Die Erfindung wird nachfolgend anhand eines Ausführungsbeispiels unter Bezugnahme auf die Zeichnung näher erläutert. Es zeigen:
- Fig. 1: eine perspektivisch dargestellte Wartungsanlage für Schiebeverschlüsse mit einer Vorrichtung zum automatischen Auswechseln der Ausgusshülse,
- Fig. 2: eine Einzelheit des Schiebeverschlusses nach Fig. 1, vergrössert dargestellt,

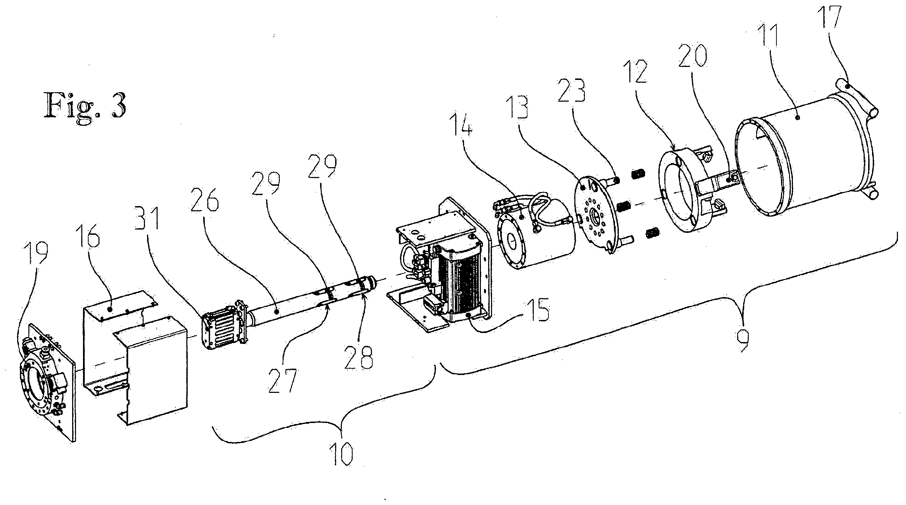

- Fig. 3: Explosionsansicht der Wechselvorrichtung nach Fig. 1,

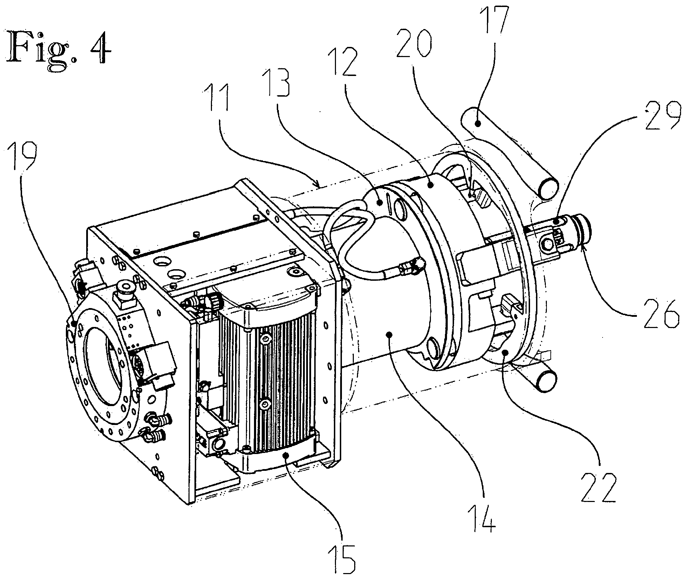

- Fig. 4: die Wechselvorrichtung nach Fig. 2 im zusammengebauten Zustand, und

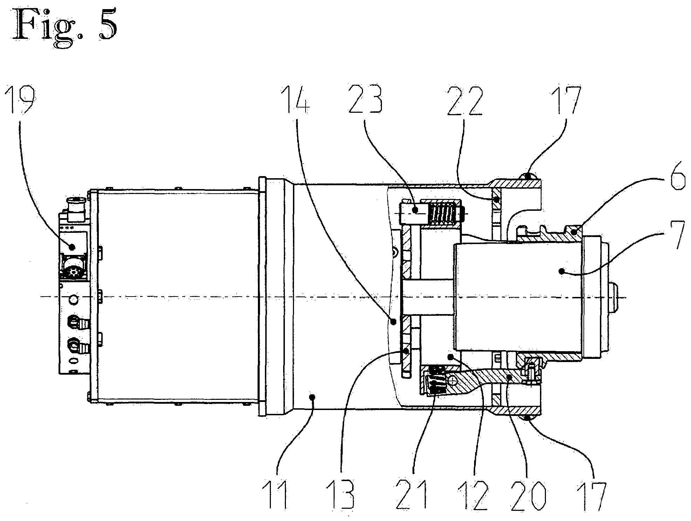

- Fig. 5: eine Einzelheit der Wechselvorrichtung nach Fig. 3 und Fig. 4.

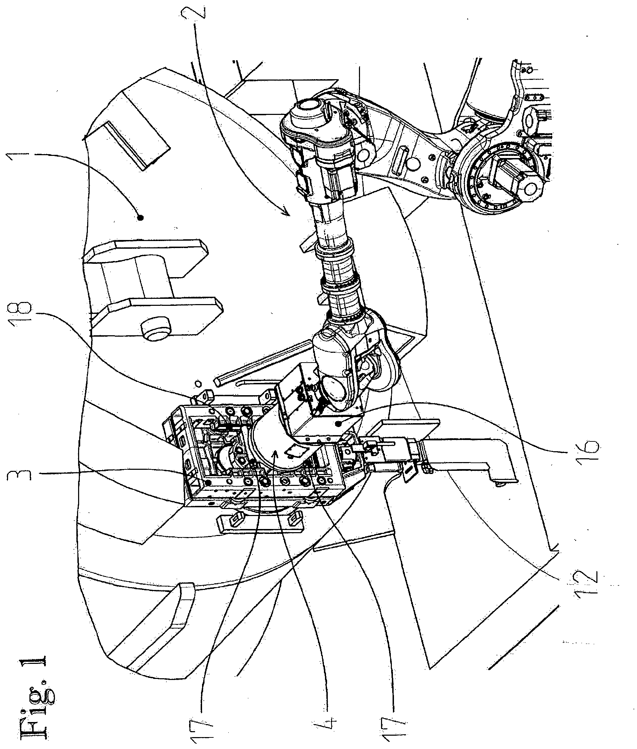

Fig. 1 zeigt einen Teilbereich der Wartungsstation einer Stranggiessanlage, in welcher die Wartung und Zustellung von Schiebeverschlüssen an Stahlpfannen oder ähnlichen Gefässen automatisch durchgeführt wird. Die vorab entleerten Pfannen 1 werden nach dem Entleeren zur Wartungsstation gefahren, wo ein Roboter 2 den Schiebeverschluss der waagerecht gestellten Pfanne programmgemäss mittels geeigneter Werkzeuge manipuliert. In der Betriebslage gemäss Fig. 1 ist am Roboter 2 eine erfindungsgemässe Vorrichtung 4 zum Wechseln der Ausgusshülse des Schiebeschlusses angekoppelt.

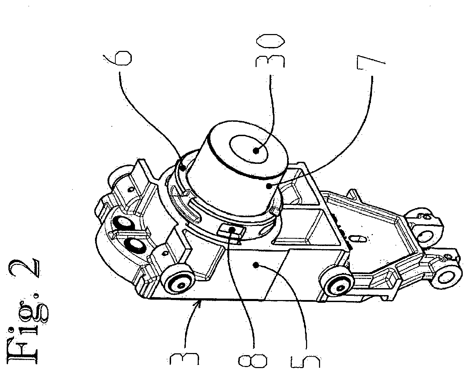

Wie aus Fig. 2 ersichtlich, weist der Schiebeverschluss 3 eine Schiebereinheit 5 auf, in welcher eine nicht sichtbare Schieberplatte und eine gegen diese eingespannte Ausgusshülse 7 eingesetzt sind. Diese wird mit einem in der Schiebereinheit 5 ein- und ausdrehbaren Tragring 6 festgespannt. Zum Verdrehen des Tragrings 6 weist er umfänglich verteilte Aussparungen 8 auf, in die beim Wechselvorgang Greifelemente der Wechselvorrichtung 4 einrasten können.

Die Wechselvorrichtung 4 setzt sich aus einer Reihe von ineinandergeführten Komponenten zusammen, die im zusammengebauten Zustand einen kompakten und platzsparenden Aufbau ermöglichen, und andererseits den Ein- und Ausbau der einzelnen Komponenten zu Wartungs- und Reparaturzwecken vereinfachen. Diese Komponenten dienen zum Teil als Mittel 10 zum Ein- und Ausbauen der Ausgusshülse 7 und zum Teil als Mittel 9 zum Ein- und Ausbauen des Tragrings. Letztere weisen ein vorderes Gehäuse 11 auf, in dem ein Greifring 12, ein Zwischenstück 13 und ein hydraulischer Rotationszylinder 14 eingebaut sind. Dieser ist an einem Hydraulikaggregat 15 angeflanscht, der seinerseits in einem rückseitigen Gehäuse 16 eingebaut ist.

Das vordere Gehäuse 11 ist mit zwei diametral zueinander angebrachten Drehmomentaufnahmen 17 versehen, die beim Wechselvorgang gegen seitliche Stützleisten 18 des Schiebeverschlusses 3 abstützbar sind. Am Gehäuse 11 ist auch ein Adapter 19 zum Verbinden der Wechselvorrichtung 4 mit den Roboter 2 der Wartungseinrichtung angebracht.

Die Wechselvorrichtung ist vorzugsweise parallel zur Achse des Roboters ausgerichtet. Dadurch kann ein etwaiges Spiel zwischen den Drehmomentaufnahmen 17 und den seitlichen Stützleisten 18 kompensiert werden und somit wirken keine Kräfte durch das Verdrehen des Tragrings 12 auf den Roboter.

Der Greifring 12 weist drei umfänglich verteilt angeordnete Tragringschnapper 20 auf, die beim Wechselvorgang in die Aussparungen 8 des Tragrings 6 einrastbar sind. Zu diesem Zweck sind sie mit Federn 21 vorgespannt. Andererseits ist ihr Freiheitsgrad durch Ansätze eines sie umfassenden Anschlagrings 22 eingeschränkt, der relativ zum Greifring 12 unverdrehbar ist. Der hydraulische Rotationszylinder 14 dient seinerseits dazu, beim Wechselvorgang den Greifring 12 in der jeweils gewünschten Drehrichtung zu verdrehen.

Die Ankoppelung des Greifrings 12 an den Rotationszylinder 14 erfolgt über das an diesem befestigte Zwischenstück 13 mit drei auch als Tiefenkompensatoren dienenden Mitnahmebolzen 23, die federnd in entsprechenden Aufnahmen 24 des Greifrings 12 geführt sind.. Zum Betätigen des Rotationszylinders 14 dient das im hinteren Gehäuse 16 befindliche Hydraulikaggregat 15. Die Drehmomentaufnahmen 17 im vorderen Gehäuse 11 stellen ihrerseits sicher, dass das vom Rotationszylinder 14 erzeugte Drehmoment voll auf die Tragringschnappern 20 des Greifrings 12 wirksam wird.

Als Mittel 10 zum Ein- und Ausbauen der Ausgusshülse 7 dient eine durch den Rotationszylinder 14 geführte Greiflanze 26, in welcher vorderseitig zwei hintereinander angeordnete Greiferpakete 27, 28 eingebaut sind. Letztere sind mit je drei umfänglich verteilten Klemmbacken 29 versehen, die unterschiedliche Durchmesser annehmen können und beim Wechselvorgang in den Giesskanal 30 des Wechselausgusses hineingreifen. In der Greiflanze 26 ist ein axial verschiebbarer Betätigungsstab zum Ausspreizen oder Einziehen der Klemmbacken 29 eingebaut. Zur Betätigung des Stabes dient ein am Rotationszylinder 14 befestigter Pneumatikzylinder 31.

Die Arbeitsweise der erfindungsgemässen Wechselvorrichtung ist wie folgt:
Die am Roboter 2 angekoppelte Wechselvorrichtung 4 wird zunächst an den Tragringschnapper 20 den Tragring 6 umgreifen, während die Greiflanze 26 im Giesskanal 30 der auszuwechselnden Ausgusshülse 7 hineingreift.

Anschliessend wird der Greifring 12 mit dem Rotationszylinder 14 so gedreht, dass die Schnapper 20 die Ansätze des Anschlagrings 22 zurücklassen, in die Ausnehmungen 8 des Tragrings 6 einrasten und ihn soweit mitnehmen, bis er aus seinem Gegenstück in der Schiebereinheit 5 gelöst ist.

Parallel dazu werden die Greiferpakete 27, 28 der Greiflanze 26 ausgeschwenkt und halten die Ausgusshülse 7 fest, während der Roboter 2 die Wechselvorrichtung 4 zurückfährt und nacheinander den Tragring 6 und die alte Ausgusshülse 7 in einer Ablage bzw. einem Abfallbehälter deponiert.

Der Roboter 2 reinigt danach die Auflage für die neue Ausgusshülse auf der Schiebeplatte, sofern diese zuvor nicht ausgewechselt worden ist. Anschliessend holt er sich mit der Greiflanze 26 eine neue aus dem Ersatzteillager und bringt sie zu einer Mörtelstation der Einrichtung, wo die Ausgusshülse mit Hilfe entsprechender Werkzeuge vermörtelt wird, wobei dies vom Roboter oder manuell erfolgen kann. Anschliessend holt er sich mit dem Greifring 12 den zwischendurch abgelagerten Tragring 6 und bringt ihn zusammen mit der neuen Ausgusshülse 7 in die ursprüngliche Ausgangsposition gegenüber der Schiebereinheit 5, in der die Tragringschnapper 20 den Tragring 7 umgreifen, während die Greiflanze 26 die neue Ausgusshülse 7 in einer Einbaulage festhält, in welcher ihr Giesskanal 30 mit dem der ihr gegenüberliegenden Schieberplatte bündig ist. Von Vorteil ist es, wenn der Greifring federnd gelagert ist, damit etwaige axiale Toleranzen und unterschiedliche Mörteldicken ausgeglichen werden können.

Der Tragring 6 wird nunmehr mit den Tragringschnappern 20 des Greifrings 12 mit einem genau definierten Drehmoment weitergedreht, das bewirkt, dass unabhängig von etwaigen Abmessungstoleranzen die neue Ausgusshülse 7 gegen die Schiebeplatte mit einer ebenfalls genau definierten Verspannkraft eingespannt wird. Die Drehmomentaufnahmen 17 des Gehäuses 12 stellen dabei sicher, dass der Greifring 12 das vom Rotationszylinder 14 erzeugte Drehmoment auf den Tragring 6 voll überträgt. Anschliessend werden die Tragringschnapper 20 und die Greiflanze 26 wieder gelöst, und der Roboter 2 wird in seine Warteposition zurückgefahren.

Die erfindungsgemässe Wechselvorrichtung zeichnet sich durch einen kompakten Aufbau aus, mit robusten Bauteilen, die leicht zu warten sind und auch im rauen Betrieb die Funktionssicherheit der Wechselvorrichtung gewährleisten.

Die erfindungsgemässe Wechselvorrichtung hat ausserdem den Vorteil, dass der Roboter 2, wie vorstehend beschrieben, den Tragring 7 und die Ausgusshülse 8 unabhängig voneinander manipuliert. Das ermöglicht die Optimierung der Abfolge der jeweils vom Roboter zu verrichtenden Arbeiten.

Anstelle eines Roboters 2 könnte als Einrichtung zum Manipulieren der Wechselvorrichtung 4 auch nur eine Hilfsvorrichtung vorgesehen sein, bei welcher diese Wechselvorrichtung mit dieser Hilfsvorrichtung manuell an den Schiebeverschluss gekoppelt werden könnte.

## Patentansprüche

1. Verfahren zum automatischen Auswechseln einer Ausgusshülse (7) eines Schiebeverschlusses (3) an einem metallurgischen Gefäss, in einer Wartungsstation mit einer Einrichtung zum Manipulieren des Schiebeverschlusses (3) mit geeigneten Werkzeugen, wobei die Ausgusshülse (7) gegen eine Schieberplatte bzw. gegen eine Schiebereinheit (5) des Schiebeverschlusses (3) mit einem durch Drehen lösbaren Tragring (6) einspannbar ist, wobei beim Wechselvorgang der Tragring (6) mit einem definierten Drehmoment verdreht wird, **dadurch gekennzeichnet, dass**
die neue Ausgusshülse (7) mit einer'ebenfalls definierten Verspannkraft gegen die Schieberplatte bzw. gegen die Schiebereinheit (5) eingespannt wird, wobei eine Vorrichtung mit Mitteln (9) zum Ein- und Ausbauen des Tragrings (6), bestehend aus einem Greifring (12) mit Tragringschnappern (20) und einem hydraulischen Rotationszylinder (14) zum Verdrehen des Greifrings, und mit Mitteln (10) zum Ein- oder Ausbauen der Ausgusshülse (7) in Gestalt einer ein- und ausfahrbaren Greiflanze (26) mit pneumatisch ein- und ausziehbaren Greifern (27, 28) versehen ist.

2. Verfahren nach Anspruch 1, **dadurch gekennzeichnet, dass**
die Einrichtung zum Manipulieren als Roboter (2) ausgebildet ist, welcher beim Wechselvorgang den Tragring (6) und die Ausgusshülse (7) unabhängig voneinander manipuliert.

3. Verfahren nach Anspruch 2, **dadurch gekennzeichnet, dass**
beim Wechselvorgang der Roboter (2) den abgebauten Tragring (6) bis zum Neuaufbau in einer Ablage deponiert wird und die Entsorgung der alten Ausgusshülse (7) und die Entnahme einer neuen Ausgusshülse (7) aus einem Ersatzteillager selbsttätig bewerkstelligt.

4. Vorrichtung zum Durchführen des Verfahrens nach Anspruch 1,
**dadurch gekennzeichnet, dass**
die Vorrichtung Mittel (9) zum Ein- und Ausbauen eines Tragrings (6) aufweist, bestehend aus einem Greifring (12) mit Tragringschnappern (20) und einem hydraulischen Rotationszylinder (14) zum Verdrehen des Greifrings, und dass sie mit Mitteln (10) zum Ein- oder Ausbauen der Ausgusshülse (7) in Gestalt einer ein- und ausfahrbaren Greiflanze (26) mit pneumatisch ein- und ausziehbaren Greifern (27, 28) versehen ist, wobei der steuerbare Rotationszylinder (14) bewirkt, dass beim Wechselvorgang der Tragring (6) durch die Tragringschnapper (20) des Greifrings (12) mit einem definierten Drehmoment verdrehbar ist.

5. Vorrichtung nach Anspruch 4, **dadurch gekennzeichnet, dass**
die Greiflanze (26) mit einem oder mehreren hintereinander angeordneten Greiferpaketen (27, 28) versehen ist.

6. Vorrichtung nach Anspruch 5, **dadurch gekennzeichnet, dass**
mittels den Greiferpaketen (27, 28) unterschiedliche Innendurchmesser der Ausgusshülsen (7) spannbar sind.

7. Vorrichtung nach Anspruch 5 oder 6, **dadurch gekennzeichnet, dass**
jedes Greiferpaket (27, 28) sich aus drei umfänglich gleichmässig verteilt angeordneten Klemmbacken (29) zusammensetzt.

## Claims

1. Method for automatically replacing a spout nozzle (7) of a slide closure (3) on a metallurgical vessel, in a maintenance station with a device for manipulating the slide closure (3) with appropriate tools, whereby the spout nozzle (7) being able to be clamped against a slide plate or against a slide unit (5) of the slide closure (3) by a carrying ring (6) that can be released by turning, whereby during the changing procedure the carrying ring (6) is turned with a defined torque, **characterised in that**
the new spout nozzle (7) is clamped against the slide plate or against the slide unit (5) with a tension force which is likewise defined, whereby the apparatus is provided with means (9) for fitting and removing the carrying ring (6) consisting of a gripping ring (12) with carrying ring catches (20) and a hydraulic rotation cylinder (14) for turning the gripping ring, and with means (10) for fitting or removing the spout nozzle (7) in form of a gripping lance (26) being retractable and extendable, with grippers (27, 28) that can be pneumatically retracted and pull out.

2. Method according to Claim 1, **characterised in that**
the device for manipulating is in the form of a robot (2), which manipulates the carrying ring (6) and the spout nozzle (7) independently of one another during the changing procedure.

3. Method according to Claim 2, **characterised in that**
during the changing procedure the robot (2) deposits the removed carrying ring (6) in a repository until it is reconstructed and the disposal of the old spout nozzle (7) and the withdrawal of a new spout nozzle (7) from a stock of replacement parts is brought about automatically.

4. Apparatus for implementing the method according to Claim 1, **characterised in that**
the apparatus has means (9) for fitting and removing the carrying ring (6) consisting of a gripping ring (12) with carrying ring catches (20) and a hydraulic rotation cylinder (14) for turning the gripping ring, and the apparatus is provided with means (10) for fitting or removing the spout nozzle (7) in the form of a gripping lance (26) being retractable and extendable, with grippers (27, 28) that can be pneumatically retracted and pull out, whereby the controllable rotation cylinder (14) causes, which during the changing procedure of the carrying ring (6) with the bearer ring snappers (20) of the gripping ring (12) is turned with a defined torque.

5. Apparatus according to Claim 4, **characterised in that**
the gripping lance (26) is provided with one or a number of gripper packets (27, 28) arranged one behind the other.

6. Apparatus according to Claim 5, **characterised in that**
different inside diameters of the spout nozzles (7) can be clamped by means of the gripper packets (27, 28).

7. Apparatus according to Claim 5 or 6, **characterised in that**
each gripper packet (27, 28) is composed of three clamping jaws (29) arranged uniformly distributed around the circumference.

## Revendications

1. Procédé de changement automatique d'un manchon (7) de rigole de coulée d'une fermeture (3) coulissante sur un récipient métallurgique dans un poste d'entretien, comprenant un dispositif de manipulation de la fermeture (3) coulissante par des outils appropriés, le manchon (7) de rigole de coulée pouvant, sur une plaque formant coulisseau ou sur une unité (5) formant coulisseau de la fermeture (3) coulissante, être bloqué par un anneau (6) de support amovible par rotation, dans lequel, lors de l'opération de changement, on fait tourner l'anneau (6) de support pour un couple défini, **caractérisé en ce qu'**
on bloque le nouveau manchon (7) de rigole de coulée, par une force de blocage également définie, sur la plaque formant coulisseau ou sur l'unité (5) formant coulisseau, dans lequel une installation est pourvue de moyens (9) de montage et de démontage de l'anneau (6) de support, constitué en un anneau (12) de préhension ayant des encliquetages (20) d'anneau de support et en un cylindre (14) de rotation hydraulique pour la rotation de l'anneau de préhension, et de moyens (10) de montage ou de démontage du manchon (7) de rigole de coulée, sous la forme d'une lance (26) de préhension escamotable et déployable ayant des préhenseurs (27, 28) pouvant entrer et sortir pneumatiquement.

2. Procédé suivant la revendication 1, **caractérisé en ce que** le dispositif de manipulation est constitué sous la forme d'un robot (2) qui, lors de l'opération de remplacement, manipule l'anneau (6) de support et le manchon (7) de rigole de coulée indépendamment l'un de l'autre.

3. Procédé suivant la revendication 2, **caractérisé en ce que**, lors de l'opération de remplacement, le robot (2) dépose l'anneau (6) de support démonté jusqu'au remontage dans une dépose et provoque automatiquement l'évacuation du vieux manchon (7) de rigole de coulée et le prélèvement d'un nouveau manchon (7) de rigole de coulée dans un stock de pièces de remplacement.

4. Installation pour effectuer le procédé suivant la revendication 1, **caractérisé en ce que**
l'installation a des moyens (9) de montage et de démontage d'un anneau (6) de support, constitué d'un anneau (12) de préhension ayant des encliquetages (20) d'anneau de support et un cylindre (14) hydraulique de rotation pour faire tourner l'anneau de préhension, et **en ce qu'**elle est pourvue de moyens (10) de montage ou de démontage du manchon (7) de rigole de coulée, sous la forme d'une lance (26) de préhension escamotable et déployable ayant des préhenseurs (27, 28) pouvant entrer et sortir pneumatiquement, le cylindre (14) de rotation commandable faisant que, lors de l'opération de changement, l'anneau (6) de support peut être tourné à un couple défini par les encliquetages (20) d'anneau de support de l'anneau (12) de préhension.

5. Installation suivant la revendication 4, **caractérisée en ce que**
la lance (26) de préhension est pourvue d'un ou de plusieurs paquets (27, 28) de préhenseurs montés les uns derrière les autres.

6. Installation suivant la revendication 5, **caractérisée en ce que**
l'on peut bloquer des diamètres intérieurs différents des manchons (7) de rigole de coulée au moyen des paquets (27, 28) de préhenseurs.

7. Installation suivant la revendication 5 ou 6, **caractérisée en ce que**
chaque paquet (27, 28) de préhenseurs se compose de trois mâchoires (29) de serrage réparties uniformément sur le pourtour.
